# EUROPÄISCHE PATENTSCHRIFT

(11) **EP 1 972 475 B1**
(45) Veröffentlichungstag und Bekanntmachung des Hinweises auf die Patenterteilung: **30.12.2009**
(21) Anmeldenummer: 08004428.2
(22) Anmeldetag: 11.03.2008
(51) Int. Cl.: B60H 1/34

(54) **Luftausströmer**
Air vent
Dispositif d'écoulement d'air

(30) Priorität: 21.03.2007 DE 102007014094
(43) Veröffentlichungstag der Anmeldung: 24.09.2008
(73) Patentinhaber: Behr GmbH & Co. KG, 70469 Stuttgart (DE)
(72) Erfinder: Benamira, Salah, 70180 Stuttgart (DE)

(56) Entgegenhaltungen:
- EP-A- 1 785 299
- WO-A-2005/021301
- DE-A1-102004 038 016

## Beschreibung

Die Erfindung betrifft einen Luftausströmer, insbesondere für den Innenraum eines Kraftfahrzeugs.

Zum Belüften der Innenräume von Kraftfahrzeugen sind aus der DE 10 2004 038 016 A1 Luftausströmer bekannt geworden, bei denen zwei Luftführungskanäle mit jeweils einem in einem Drallkanal angeordneten Spotkanal nebeneinander angeordnet sind, wobei aus den Spotkanälen jeweils Luftströmungen mit gerichteter und aus den Drallkanälen jeweils Luftströmungen mit diffuser Strömungscharakteristik ausströmbar sind. Durch Mischung dieser Strömungscharakteristiken ergeben sich beliebige Gesamtströmungscharakteristiken. Die Luftströmungen können dabei schwenkbar sein. Es hat sich jedoch gezeigt, dass infolge Interaktion der diffusen Luftströmungen der beiden Luftführungskanäle unmittelbar hinter dem Luftaustritt die Eindringtiefe der Luftströme in den Innenraum beschränkt wird und die Schwenkbarkeit der diffusen Luftströme behindert wird.

Der Erfindung liegt daher die Aufgabe zugrunde, einen verbesserten Luftausströmer anzugeben.

Die Aufgabe wird erfindungsgemäß gelöst durch einen Luftausströmer mit den Merkmalen des Anspruchs 1 und ein Verfahren mit den Merkmalen des Anspruchs 10.

Vorteilhafte Weiterbildungen sind Gegenstand der Unteransprüche.

Ein erfindungsgemäßer Luftausströmer umfasst mindestens zwei zueinander parallel angeordnete Luftführungskanäle, wobei für jeden der Luftführungskanäle eine diffuse und/oder eine gerichtete Strömungscharakteristik (auch "Spot" genannt) und durch deren variable Mischung in einer im strömungsausgangsseitigen Bereich der Luftführungskanäle angeordneten Wechselwirkungszone eine Gesamtströmungscharakteristik einstellbar ist. In dieser Wechselwirkungszone ist erfindungsgemäß zwischen den Luftströmen benachbarter Luftführungskanäle jeweils eine Trennwand angeordnet. Die Wechselwirkungszone bezeichnet einen in Strömungsrichtung den Luftführungskanälen, insbesondere deren Drallkanälen nachgelagerten Bereich, in dem bei einem Luftausströmer ohne Anordnung der Trennwand in herkömmlicher Weise eine Wechselwirkung zwischen den mit zumindest teilweise diffuser Gesamtströmungscharakteristik ausströmenden Luftströmen der Luftführungskanäle beginnen würde. Durch den Einsatz der Trennwand findet die Wechselwirkung weiter entfernt von den Luftführungskanälen, d.h. in einem vorgebbaren Abstand zum Ende der Luftführungskanäle, insbesondere deren Spotkanäle statt, so dass die ausströmende Luft trotz diffuser Gesamtströmungscharakteristik tiefer in einen zu belüftenden Raum, beispielsweise einen Innenraum eines Kraftfahrzeugs, eindringen kann.

In einer bevorzugten Ausführungsform umfasst jeder der Luftführungskanäle jeweils einen in einem Drallkanal angeordneten Spotkanal, wobei der Luftstrom mit der diffusen Strömungscharakteristik aus dem Drallkanal und der Luftstrom mit der gerichteten Strömungscharakteristik aus dem Spotkanal ausströmbar ist und die Gesamtströmungscharakteristik in der Wechselwirkungszone mittels variierbarer Luftströme im Spotkanal und/oder im Drallkanal einstellbar ist. Eine solche Ausbildung der Luftführungskanäle hat sich als aerodynamisch und akustisch besonders vorteilhaft erwiesen. Der Drallkanal enthält insbesondere Luftleiteinrichtungen, die der durchströmenden Luft eine Rotation aufprägen. Beispielsweise sind einstellbare helixförmige oder schaufelförmige Luftleiteinrichtungen vorgesehen. Mittels des oder der Luftleiteinrichtungen wird die Luftströmung im Drallkanal in Querrichtung zur Längsachse des Luftausströmers nach außen an die Innenwandung des Luftausströmers umgelenkt und somit verdrallt. Solange die verdrallte Luftströmung den Luftausströmer durchfließt, wirken deren Wände entgegen der Zentrifugalkraft der verdrallten Luftströmung. Am Ausgang des Luftausströmers platzt die Luftströmung in radialer Richtung auf und strömt diffus in den Fahrzeuginnenraum.

Vorzugsweise ragt in Längsausdehnung des Luftausströmers das strömungsausgangsseitige Ende der Trennwand über das strömungsausgangsseitige Ende der Spotkanäle hinaus. Hierdurch erfolgt eine Mischung der Luftströme der benachbarten Luftführungskanäle nach dem Ende der Trennwand. Je nach Ausbildung der Länge des Spotkanals, insbesondere wenn dieser kürzer als der zugehörige Luftführungskanal ist, kommt es zu einer Mischung der Luftströme des jeweils einzelnen Luftführungskanals und nach der Trennwand zu einer Mischung der Luftströme aller Luftführungskanäle.

Zweckmäßigerweise liegt in Längsausdehnung des Luftausströmers das strömungsausgangsseitige Ende der Trennwand in gleicher Ebene mit den strömungsausgangsseitigen Enden der Luftführungskanäle. Alternativ kann das strömungsausgangsseitige Ende der Trennwand kürzer als die strömungsausgangsseitigen Enden der Luftführungskanäle und länger als die strömungsausgangsseitigen Enden der Spotkanäle sein. Je nach Ausführungsform kann eine auf dem Luftausströmer angeordnete Lamelle auf- oder eingesetzt werden. Bevorzugt wird die Lamelle in den Luftausströmer eingesetzt, so dass dieser einfach und passgenau, z. B. in einer Ausnehmung eines Armaturenbretts, montiert werden kann. In diesem Ausführungsbeispiel ist die Trennwand zumindest kürzer als die strömungsausgangsseitigen Enden der Luftführungskanäle, insbesondere mindestens um die Tiefe der eingesetzten Lamelle kürzer.

In erfindungsgemäßer Ausführungsform sind die benachbarten Luftführungskanäle oder deren Spotkanäle bzw. Teile der Luftführungskanäle oder Spotkanäle mit der Trennwand gleichsinnig schwenkbar. Die Trennwand ist hierzu vorzugsweise mechanisch über ein Koppelelement oder ein Koppelgetriebe mit den benachbarten Luftführungskanälen oder deren Spotkanäle bzw. Teilen der Luftführungskanäle gekoppelt. Auf diese Weise kann der ausströmenden Luft im zu belüftenden Raum eine gewünschte Richtung gegeben werden. Ist dies bereits ohne eine Trennwand für die gerichtete Gesamtströmungscharakteristik möglich, erlaubt der Einsatz der Trennwand auch eine verbesserte Ausrichtung von Luftströmen mit zumindest teilweise diffuser Gesamtströmungscharakteristik (beispielsweise einer "Spot + Diffus" genannten Gesamtströmungscharakteristik).

Vorzugsweise ist ein schwenkbarer Betätigungsbügel zur Betätigung einer Schwenkbewegung der Luftführungskanäle und der Trennwand vorgesehen, wobei die Trennwand in den Betätigungsbügel eingepasst ist. Solche Betätigungsbügel dienen auch bei Luftausströmern ohne Trennwand zur Betätigung der Schwenkbewegung. Durch das Einpassen der Trennwand in den Betätigungsbügel wird ein konstruktiver Eingriff in den Aufbau des Luftausströmers gering gehalten, wodurch Entwicklungs- und Fertigungskosten reduziert werden. Mittels des Betätigungsbügels können die Lüftführungskanäle und die Trennwand synchron bewegt werden. Alternativ kann auch eine separate Verstellung durch eine entsprechende Anzahl von weiteren Betätigungselementen vorgesehen sein.

In einer bevorzugten Ausführungsform ist die Trennwand aus einem schallabsorbierenden Material gebildet. Man bezeichnet die Trennwand dann auch als Akustik-Pad. Auf diese Weise wird eine mögliche Beeinträchtigung der Akustik infolge Verwendung der Trennwand kompensiert.

Die Trennwand ist vorzugsweise senkrecht ausgerichtet, insbesondere dann, wenn ein Luftausströmer mit zwei horizontal nebeneinander angeordneten Luftführungskanälen verwendet wird. Die Trennwand und die Luftführungskanäle bzw deren Spotkanäle sind dann insbesondere horizontal schwenkbar ausgebildet.

Zum Schwenken der austretenden Luftströme in senkrechter Richtung ist bevorzugt mindestens eine zur Trennwand senkrecht ausgerichtete Lamelle schwenkbar angeordnet.

Ausführungsbeispiele der Erfindung werden anhand einer Zeichnung näher erläutert. Darin zeigen:
- Fig. 1: einen Längsschnitt eines Luftausströmers mit einer Trennwand,
- Fig. 2: eine perspektivische Ansicht des Luftausströmers von hinten,
- Fig.3: eine weitere perspektivische Ansicht des Luftausströmers von hinten,
- Fig. 4: eine perspektivische Ansicht des Luftausströmers von vorne,
- Fig. 5: eine weitere perspektivische Ansicht des Luftausströmers von vorne,
- Fig. 6a, 6b: perspektivische Ansichten der Trennwand,
- Fig. 7a, 7b: schematische Ansichten des Luftausströmers mit einer Gesamtströmungscharakteristik "Spot + Diffus", und
- Fig. 8a, 8b: schematische Ansichten eines Betätigungsbügels mit und ohne eingepasste Trennwand.

Einander entsprechende Teile sind in allen Figuren mit den gleichen Bezugszeichen versehen.

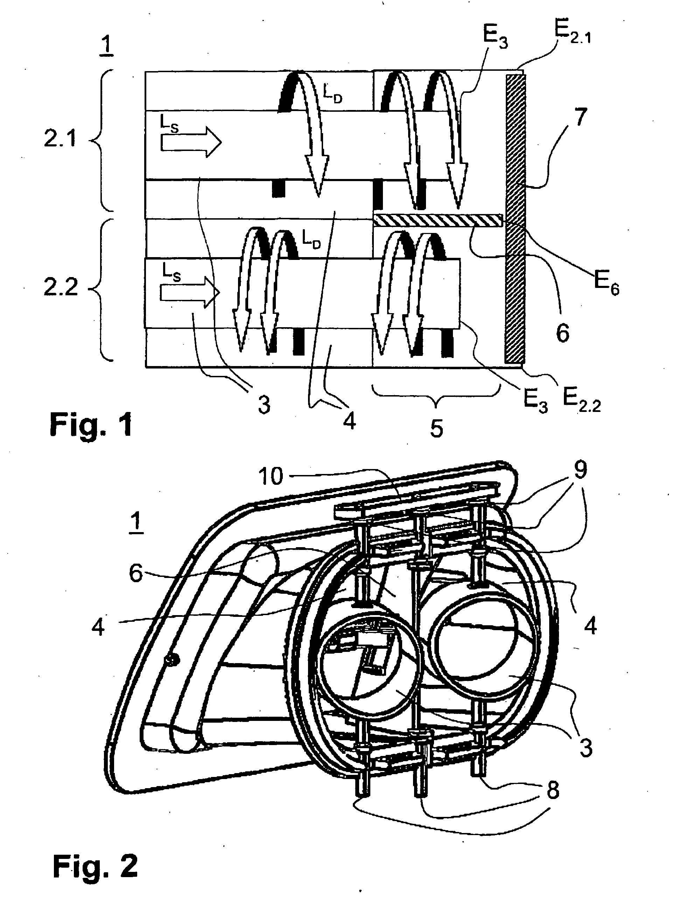

In Figur 1 ist eine schematische Schnittansicht eines Luftausströmers 1 von oben gezeigt. Der Luftausströmer 1 umfasst beispielhaft zwei zueinander parallel angeordnete Luftführungskanäle 2.1, 2.2. Auch können weitere Luftführungskanäle 2.1 bis 2.n nebeneinander und/oder übereinander angeordnet sein.

Jeder der Luftführungskanäle 2.1, 2.2 umfasst einen Spotkanal 3, der insbesondere konzentrisch in einem Drallkanal 4 angeordnet ist. Der Spotkanal 3 dient dem Ausströmen einer Luftströmung oder eines Luftstroms L_{S} mit gerichteter Strömungscharakteristik ("Spot"), der Drallkanal 4 dem Ausströmen einer Luftströmung oder eines Luftstroms L_{D} mit diffuser Strömungscharakteristik. Dies wird beispielsweise mittels hier nicht gezeigter Luftleiteinrichtungen erreicht, die der die Drallkanäle 4 durchströmenden Luft eine Rotation aufprägen.

In einer im Bereich von strömungsausgangsseitigen Enden E_{2.1} und E_{2.2} der Luftführungskanäle 2.1 und 2.2 angeordneten Wechselwirkungszone 5 ist zwischen den Luftströmen L_{D}, L_{S} der benachbarten Luftführungskanäle 2.1 und 2.2 eine Trennwand 6 angeordnet.

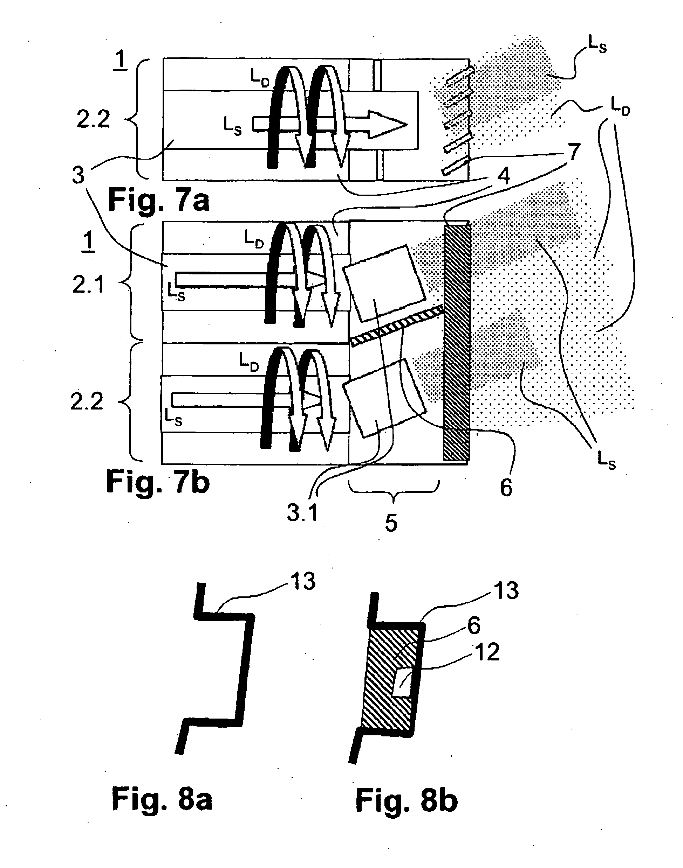

Das strömungsausgangsseitige Ende E₆ der Trennwand 6 ragt beispielsweise in Längsausdehnung des Luftausströmers 1 über das strömungsausgangsseitige Ende E₃ der Spotkanäle 3 der Luftführungskanäle 2.1 und 2.2 hinaus. Hierdurch erfolgt eine Mischung der Luftströme L_{D} und L_{S} der benachbarten Luftführungskanäle 2.1 und 2.2 nach dem Ende E₆ der Trennwand 6. Je nach Länge der Luftführungskanäle 2.1 und 2.2 kann die Mischung der Luftströme L_{D}, Lₛ aller Luftführungskanäle 2.1 und 2.2 innerhalb des Luftausströmers 1 in der Wechselwirkungszone 5 oder außerhalb dieser und somit außerhalb des Luftausströmers 1, wie in Figuren 1, 7a, 7b gezeigt, erfolgen. Gemäß dem Ausführungsbeispiel nach Figur 1 werden durch die zwischen den Luftführungskanälen 2.1 und 2.2 angeordnete Trennwand 6 die Luftströme L_{D} und Lₛ jeweils eines einzelnen Luftführungskanals 2.1 oder 2.2 in der Wechselwirkungszone 5 gemischt.

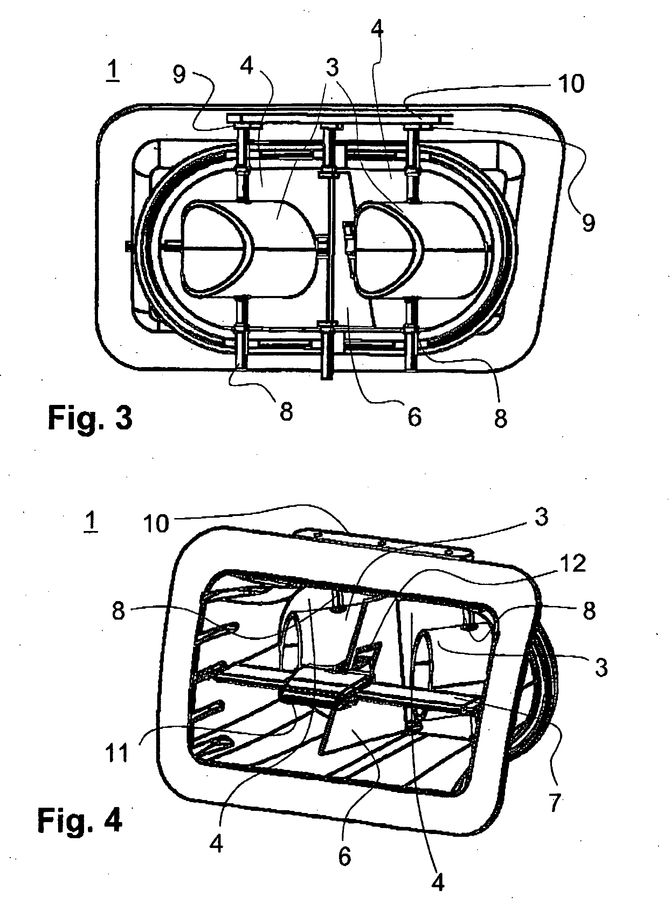

Ist, wie in Figur 1 gezeigt, das strömungsausgangsseitige Ende E₆ der Trennwand 6 kürzer als das strömungsausgangsseitige Ende E_{2.1} und E_{2.2} der Luftführungskanäle 2.1 und 2.2, kann am Austritt des Luftausströmers 1 in diesen eine Lamelle 7 eingesetzt werden. Auch können mehrere Lamellen 7 vorgesehen sein. Die Funktion der Lamellen 7 zur Einstellung einer Strömungsrichtung ist in den Figuren 4, 5 und 7a, 7b verdeutlicht.

Alternativ zum Einsetzen der Lamelle 7 in den Austritt des Luftausströmers 1 kann das Ende E₆ der Trennwand 6 in nicht näher dargestellter Art und Weise in gleicher Ebene mit den strömungsausgangsseitigen Enden E_{2.1} und E_{2.2} der Luftführungskanäle 2.1 und 2.2 liegen. In diesem Fall würde die Lamelle 7 außen auf den Luftausströmer 1 aufgesetzt.

Aus dem Austritt des Luftausströmers 1 treten die Luftströme L_{D}, L_{S} in einen zu belüftenden Raum aus. Die Trennwand 6 bewirkt eine in Strömungsrichtung räumlich verschobene Wechselwirkung zwischen den Luftströmen L_{D} der beiden Drallkanäle 4. Die Luftströme L_{S} der beiden Spotkanäle 3 beeinflussen sich infolge ihrer gerichteten Strömungscharakteristik ohnehin kaum gegenseitig. Die Luftströme L_{D} hingegen würden ohne die Trennwand 6 bereits in der Wechselwirkungszone 5 interagieren. Durch unterschiedlich starkes Beaufschlagen der Spotkanäle 3 und der Drallkanäle 4 mit Luft lässt sich eine Gesamtströmungscharakteristik des jeweiligen Luftführungskanals 2.1, 2.2 bzw. des Luftausströmers 1 (bei synchroner Einstellung der Luftführungskanäle 2.1, 2.2) einstellen, beispielsweise eine Gesamtströmungscharaktenstik aus den Luftströmen Lₛ, L_{D} (= "Spot + Diffus").

Figur 2 zeigt ebenso wie Figur 3 eine perspektivische Ansicht des Luftausströmers 1 aus Figur 1 von hinten. Die Spotkanäle 3 sind um je eine senkrechte Achse 8 (in der Form jeweils zweier Achszapfen) schwenkbar gelagert, ebenso wie die Trennwand 6, die hier eine dem Design und der Einbaulage des Luftausströmers 1 geschuldete Deltaform aufweist. Um die Spotkanäle 3 und die Trennwand 6 synchron und gleichsinnig schwenken zu können, sind die senkrechten Achsen 8 mit je einem Exzenter 9 versehen, wobei die Exzenter 9 mit einem Pleuel 10 untereinander verbunden sind. Die Exzenter 9 und der Pleuel 10 bilden eine mögliche Ausführungsform für Betätigungselemente; auch kann ein anderes geeignetes Betätigungselement verwendet werden. Auf diese Weise kann der ausströmenden Luft im zu belüftenden Raum eine gewünschte Richtung gegeben werden. Ist dies bereits ohne eine Trennwand 6 für die gerichtete Gesamtströmungscharakteristik möglich, erlaubt der Einsatz der Trennwand 6 auch eine verbesserte Ausrichtung von Luftströmen L_{D}, L_{S} mit diffuser oder teilweise diffuser Gesamtströmungscharakteristik ("Spot + Diffus").

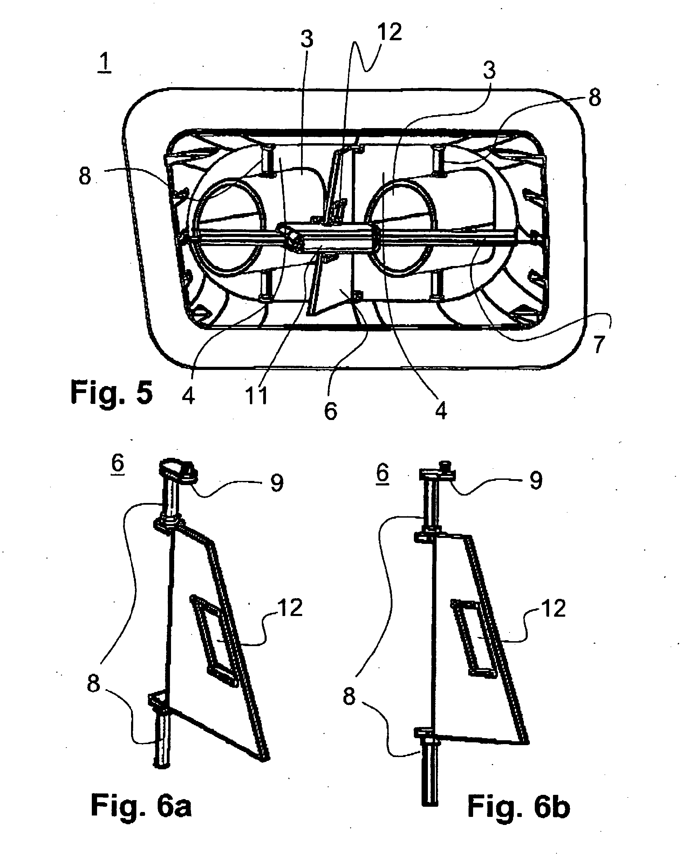

Figur 4 zeigt, ebenso wie Figur 5, eine perspektivische Ansicht des Luftausströmers 1 aus Figur 2 von vom. Die Abbildungen zeigen eine horizontale Lamelle 7, die um eine nicht gezeigte waagerechte Achse schwenkbar gelagert ist, um die in den zu belüftenden Raum ausströmende Luft in senkrechter Richtung schwenken zu können. Parallel zu der Lamelle 7 sind weitere Lamellen 7 vorgesehen, die mit dieser synchron schwenkbar sind, jedoch zur besseren Sichtbarkeit der Trennwand 6 nicht gezeigt werden. Auf der gezeigten Lamelle 7 ist längsverschiebbar eine Schiebebetätigung 11 angeordnet, die zum Schwenken der Trennwand 6 und der Spotkanäle 3 im Eingriff mit der Trennwand 6 steht. Die Trennwand 6 weist hierzu eine Aussparung 12 auf.

Die Figuren 6a und 6b zeigen verschiedene perspektivische Darstellungen der Trennwand 6 mit der senkrechten Achse 8, dem Exzenter 9 und der Aussparung 12.

Figur 7a zeigt eine schematische Ansicht des Luftausströmers 1 von der Seite, Figur 7b entsprechend von oben. Der Luftausströmer 1 strömt Luft mit einer Gesamtströmungscharakteristik L_{S} und L_{D} (= "Spot + Diffus") aus. Schwenkbare Spotkanalabschnitte 3.1 der Spotkanäle 3 im Bereich der Wechselwirkungszone 5 sind zusammen mit der Trennwand 6 zur Seite geschwenkt. Die Luftströme Lₛ mit gerichteter Strömungscharakteristik strömen infolge der Ausrichtung der Spotkanäle 3 in der durch die Schwenkung vorgegebenen Richtung aus. Die Luftströme L_{D} mit diffuser Strömungscharakteristik schlagen diese Richtung infolge der Verwendung der Trennwand 6 ein, die eine vorzeitige Interaktion der beiden Luftströmungen L_{D} verhindert. Die Lamellen 7 sind nach oben geschwenkt und leiten die Luftströme L_{D}, Lₛ zusätzlich in diese Richtung um.

Figur 8a zeigt einen Betätigungsbügel 13, wie er zur Betätigung der Schwenkbewegung der Spotkanäle 3 in herkömmlichen Luftausströmern Verwendung findet. Figur 8b zeigt die Trennwand 6, die in den Betätigungsbügel 13 eingepasst ist, so dass sich eine einfache Möglichkeit zur Umrüstung vorhandener oder in der laufenden Produktion befindlicher Luftausströmer 1 ergibt. Für den Eingriff mit der Schiebebetätigung 11 ist hier ebenfalls eine Aussparung 12 vorgesehen.

Die Trennwand 6 ist insbesondere aus einem schallabsorbierenden Material gebildet.

Die Trennwand 6 kann eine von der gezeigten Deltaform abweichende, vorzugsweise flächige Form aufweisen.

Es kann eine größere Anzahl an Luftführungskanälen 2.1 bis 2.n vorgesehen sein. Insbesondere dann ist zwischen jeweils zwei benachbarten Luftführungskanälen 2.1 bis 2.n eine Trennwand 6 vorgesehen. In einem nicht dargestellten Ausführungsbeispiel können so für eine Anzahl von drei oder vier Luftführungskanälen 2.1 bis 2.4 mit zugeordneten Drallkanälen 4 und Spotkanälen 3, zwischen diesen eine Anzahl von zwei oder drei Trennwänden 6 vorgesehen sein.

Die Strömungscharakteristiken der Luftführungskanäle 2.1 bis 2.n können auf andere Weise als mit im Drallkanal 4 angeordnetem Spotkanal 3 erreicht werden.

Die Luftführungskanäle 2.1 bis 2.n können im Ganzen schwenkbar gebildet sein.

Der Luftausströmer 1 kann mit starren statt schwenkbaren Spotkanälen 3 und/oder Luftführungskanälen 2.1 bis 2.n und/oder Trennwänden 6 ausgebildet sein.

## Patentansprüche

1. Luftausströmer (1) mit mindestens zwei parallel zueinander angeordneten Luftführungskanälen (2.1 bis 2.n), wobei für jeden der Luftführungskanäle (2.1 bis 2.n) ein Luftstrom (L_{D}) mit einer diffusen und/oder ein Luftstrom (L_{S}) mit einer gerichteten Strömungscharakteristik und in einer im strömungsausgangsseitigen Bereich der Luftführungskanäle (2.1 bis 2.n) angeordneten Wechselwirkungszone (5) durch Mischung der Luftströme (L_{D}, L_{S}) der Luftführungskanäle (2.1 bis 2.n) eine Gesamtströmungscharakteristik einstellbar ist,
wobei in der Wechselwirkungszone (5) zwischen den Luftströmen (L_{D}, L_{S}) benachbarter Luftführungskanäle (2.1 bis 2.n) jeweils eine Trennwand (6) angeordnet ist
**dadurch gekennzeichnet, dass** benachbarte Luftführungskanäle (2.1 bis 2.n) oder deren Spotkanäle (3) zumindest teilweise mit der Trennwand (6) gleichsinnig schwenkbar sind.

2. Luftausströmer (1) nach Anspruch 1,
**dadurch gekennzeichnet, dass** jeder der Luftführungskanäle (2.1 bis 2.n) jeweils einen in einem Drallkanal (4) angeordneten Spotkanal (3) umfasst, wobei der Luftstrom (L_{D}) mit der diffusen Strömungscharakteristik aus dem Drallkanal (4) und der Luftstrom (L_{S}) mit der gerichteten Strömungscharakteristik aus dem Spotkanal (3) ausströmbar ist und die Gesamtströmungscharakteristik in der Wechselwirkungszone (5) mittels variierbarer Luftströme (L_{D}, L_{S}) im Spotkanal (3) und/oder im Drallkanal (4) einstellbar ist.

3. Luftausströmer (1) nach Anspruch 1 oder 2,
**dadurch gekennzeichnet, dass** in Längsausdehnung des Luftausströmers (1) das strömungsausgangsseitige Ende (E₆) der Trennwand (6) über die strömungsausgangsseitigen Enden (E₃) der Spotkanäle (3) hinausragt.

4. Luftausströmer (1) nach einem der Ansprüche 1 bis 3,
**dadurch gekennzeichnet, dass** in Längsausdehnung des Luftausströmers (1) das strömungsausgangsseitige Ende (E₆) der Trennwand (6) in gleicher Ebene mit den strömungsausgangsseitigen Enden (E_{2.1}, E_{2,2}) der Luftführungskanäle (2.1 bis 2.n) liegt.

5. Luftausströmer (1) nach einem der Ansprüche 2 bis 4,
**dadurch gekennzeichnet, dass** in Längsausdehnung des Luftausströmers (1) das strömungsausgangsseitige Ende (E₆) der Trennwand (6) kürzer als die strömungsausgangsseitigen Enden (E_{2.1}, E_{2,2}) der Luftführungskanäle (2.1 bis 2.n) und länger als die strömungsausgangsseitigen Enden (E₃) der Spotkanäle (3) ist.

6. Luftausströmer (1) nach einem der Ansprüche 1 bis 5,
**dadurch gekennzeichnet, dass** ein schwenkbarer Betätigungsbügel (13) zur Betätigung einer Schwenkbewegung zumindest von Teilen der Luftführungskanäle (2.1 bis 2.n) oder der Spotkanäle (3) und der Trennwand (6) vorgesehen ist, wobei die Trennwand (6) in den Betätigungsbügel (13) eingepasst ist.

7. Luftausströmer (1) nach einem der Ansprüche 1 bis 6,
**dadurch gekennzeichnet, dass** die Trennwand (6) aus einem schallabsorbierenden Material gebildet ist.

8. Luftausströmer (1) nach einem der Ansprüche 1 bis 7,
**dadurch gekennzeichnet, dass** die Trennwand (6) senkrecht ausgerichtet ist.

9. Luftausströmer (1) nach einem der Ansprüche 1 bis 8,
**dadurch gekennzeichnet, dass** mindestens eine zur Trennwand (6) senkrecht ausgerichtete Lamelle (7) senkrecht zur deren Schwenkrichtung schwenkbar angeordnet ist.

10. Verfahren zur Beeinflussung einer Strömungscharakteristik von mindestens zwei Luftströmen (L_{D}, L_{S}) mit unterschiedlicher Strömungscharakteristik, die aus je einem von mindestens zwei zueinander parallel angeordneten Luftführungskanälen (2.1 bis 2.n) eines Luftausströmers (1) ausströmen, bei dem aus jedem Luftführungskanal (2.1 bis 2.n) zumindest ein Luftstrom (L_{D}) mit einer diffusen Strömungscharakteristik, ein Luftstromstrom (L_{S}) mit gerichteter Strömungscharakteristik und/oder durch deren Kombination eine Gesamtströmungscharakteristik in einer im strömungsausgangsseitigen Bereich der Luftführungskanäle (2.1 bis 2.n) angeordneten Wechselwirkungszone (5) eingestellt wird, wobei mittels einer in der Wechselwirkungszone (5) zwischen den Luftströmen (L_{D}, L_{S}) benachbarter Luftführungskanäle (2.1. bis 2.n) angeordneten Trennwand (6) eine Wechselwirkung zwischen den Luftströmen (L_{D}, L_{S}) beeinflusst wird, **dadurch gekennzeichnet, dass** die Trennwand (6) zur Beeinflussung einer Ausströmrichtung zusammen mit den Luftführungskanälen (2.1 bis 2.n) oder deren Spotkanälen (3) oder Teilen der Luftführungskanäle (2.1 bis 2.n) oder Spotkanäle (3) gleichsinnig geschwenkt wird.

11. Verfahren nach Anspruch 10, wobei die gerichtete Strömungscharakteristik für jeden der Luftführungskanäle (2.1 bis 2.n) mittels Durchströmung jeweils eines in je einem Drallkanal (4) angeordneten Spotkanals (3) bewirkt wird und dass die diffuse Strömungscharakteristik mittels Durchströmung des Drallkanals (4) bewirkt wird.

## Claims

1. Air vent (1) with at least two air ducts (2.1 to 2.n) arranged parallel to one another, such that for each of the air ducts (2.1 to 2.n) an air flow (L_{D}) with a diffuse flow characteristic and/or an air flow 9L_{S}) with a directed flow characteristic can be produced and, in an interaction zone (5) positioned in the flow outlet area of the air ducts (2.1 to 2.n), an overall flow characteristic can be produced by mixing the air flows (L_{D}, L_{S}) of the air ducts (2.1 to 2.n),
such that in the interaction zone (5), in each case a partition wall (6) is arranged between the air flows (L_{D}, L_{S}) of adjacent air ducts (2.1 to 2.n),
**characterised in that** adjacent air ducts (2.1 to 2.n) or their spot channels (3) can be pivoted at least in part with the partition wall (6) in the same direction.

2. Air vent (1) according to Claim 1,
**characterised in that** each of the air ducts (2.1 to 2.n) comprises a respective spot channel arranged inside a spiral channel (4), such that the air flow (L_{D}) with the diffuse flow characteristic can flow out of the spiral channel (4) and the air flow (L_{S}) with the directed flow characteristic can flow out of the spot channel (3), and the overall flow characteristic can be adjusted by varying the air flows (L_{D}, L_{S}) in the spot channel (3) and/or in the spiral channel (4).

3. Air vent (1) according to Claims 1 or 2,
**characterised in that** in the longitudinal extension of the air vent (1) the end (E₆) of the partition wall (6) on the flow outlet side projects beyond the flow outlet ends (E₃) of the spot channels (3).

4. Air vent (1) according to any of Claims 1 to 3,
**characterised in that** in the longitudinal extension of the air vent (1) the end (E₆) of the partition wall (6) on the flow outlet side is in the same plane as the flow outlet ends (E_{2.1}, E_{2.2}) of the air ducts (2.1 to 2.n).

5. Air vent (1) according to any of Claims 2 to 4,
**characterised in that** in the longitudinal extension of the air vent (1), the end (E₆) of the partition wall (6) on the flow outlet side is shorter than the flow outlet ends (E_{2.1}, E_{2.2}) of the air ducts (2.1 to 2.n) and longer than the flow outlet ends (E₃) of the spot channels (3).

6. Air vent (1) according to any of Claims 1 to 5,
**characterised in that** a pivoting actuation bracket (13) for actuating a pivoting movement of at least some of the air ducts (2.1 to 2.n) or the spot channels (3) and the partition wall (6) is provided, the partition wall (6) being adapted to the actuation bracket (13).

7. Air vent (1) according to any of Claims 1 to 6,
**characterised in that** the partition wall (6) is made of a sound-absorbing material.

8. Air vent (1) according to any of Claims 1 to 7,
**characterised in that** the partition wall (6) is orientated vertically.

9. Air vent (1) according to any of Claims 1 to 8,
**characterised in that** at least one lamella (7) directed perpendicularly to the partition wall (6) is arranged to pivot perpendicularly to its pivoting direction.

10. Method for influencing a flow characteristic of at least two air flows (L_{D}, L_{S}) with different flow characteristics, which flow in each case out of at least two air ducts (2.1 to 2.n) of an air vent (1) arranged parallel to one another, in which, out of each air duct (2.1 to 2.n) there emerges at least one air flow (L_{D}) with a diffuse flow characteristic, an air flow (L_{S}) with a directed flow characteristic, and/or by their combination in an interaction zone (5) arranged in the outflow side area of the air ducts (2.1 to 2.n), an overall flow characteristic, such that an interaction between the air flows (L_{D}. L_{S}) can be influenced by means of a partition wall (6) arranged in the said interaction zone (5) between the air flows (L_{D}, L_{S}) of adjacent air ducts (2.1 to 2.n),
**characterised in that** to influence an outflow direction the partition wall (6), together with the air ducts (2.1 to 2.n) or their spot channels (3), or parts of the air ducts (2.1 to 2.n) or spot channels (3), are pivoted in the same direction.

11. Method according to Claim 10, such that the directed flow characteristic for each of the air ducts (2.1 to 2.n) is produced by passing air through a respective spot channel (3) arranged inside a spiral channel (4), and the diffuse flow characteristic by passing air through the said spiral channel (4).

## Revendications

1. Diffuseur d'air (1) comprenant au moins deux conduits de guidage d'air (2.1 à 2.n) disposés de façon parallèle l'un à l'autre, où un flux d'air (L_{D}) ayant une caractéristique d'écoulement diffus et / ou un flux d'air (L_{S}) ayant une caractéristique d'écoulement dirigé est réglable pour chacun des conduits de guidage d'air (2.1 à 2.n), et une caractéristique globale d'écoulement, obtenue par mélange des flux d'air (L_{D}, L_{S}) des conduits de guidage d'air (2.1 à 2.n), est réglable dans une zone d'interaction (5) disposée dans la zone - côté sortie d'écoulement - des conduits de guidage d'air (2.1 à 2.n), où une paroi de séparation (6) est disposée à chaque fois dans la zone d'interaction (5), entre les flux d'air (L_{D}, L_{S}) de conduits de guidage d'air voisins (2.1 à 2.n),
**caractérisé en ce que** des conduits de guidage d'air voisins (2.1 à 2.n) ou leurs conduits d'écoulement dirigé (3) peuvent pivoter, au moins partiellement, dans le même sens que la paroi de séparation (6).

2. Diffuseur d'air (1) selon la revendication 1, **caractérisé en ce que** chacun des conduits de guidage d'air (2.1 à 2.n) comprend à chaque fois un conduit d'écoulement dirigé (3) disposé dans un conduit d'écoulement tourbillonnaire (4), où le flux d'air (L_{D}) ayant la caractéristique d'écoulement diffus peut s'écouler à partir du conduit d'écoulement tourbillonnaire (4), et le flux d'air (L_{S}) ayant la caractéristique d'écoulement dirigé peut s'écouler à partir du conduit d'écoulement dirigé (3), et la caractéristique globale d'écoulement est réglable, dans la zone d'interaction (5), au moyen de flux d'air variables (L_{D}, L_{S}) circulant dans le conduit d'écoulement dirigé (3) et / ou dans le conduit d'écoulement tourbillonnaire (4).

3. Diffuseur d'air (1) selon la revendication 1 ou 2,
**caractérisé en ce que**, suivant l'étendue longitudinale du diffuseur d'air (1), l'extrémité (E₆) - côté sortie d'écoulement - de la paroi de séparation (6) dépasse des extrémités (E₃) - côté sortie d'écoulement - des conduits d'écoulement dirigé (3).

4. Diffuseur d'air (1) selon l'une quelconque des revendications 1 à 3, **caractérisé en ce que**, suivant l'étendue longitudinale du diffuseur d'air (1), l'extrémité (E₆) - côté sortie d'écoulement - de la paroi de séparation (6) se situe dans le même plan que les extrémités (E_{2.1}, E_{2.2}) - côté sortie d'écoulement - des conduits de guidage d'air (2.1 à 2.n).

5. Diffuseur d'air (1) selon l'une quelconque des revendications 2 à 4, **caractérisé en ce que**, suivant l'étendue longitudinale du diffuseur d'air (1), l'extrémité (E₆) - côté sortie d'écoulement - de la paroi de séparation (6) est plus courte que les extrémités (E_{2.1}, E₂₋₂) - côté sortie d'écoulement - des conduits de guidage d'air (2.1 à 2.n) et plus longue que les extrémités (E₃) - côté sortie d'écoulement - des conduits d'écoulement dirigé (3).

6. Diffuseur d'air (1) selon l'une quelconque des revendications 1 à 5, **caractérisé en ce qu'**il est prévu un étrier de commande pivotant (13) servant à effectuer un mouvement pivotant d'au moins certaines parties des conduits de guidage d'air (2.1 à 2.n) ou des conduits d'écoulement dirigé (3) et de la paroi de séparation (6), où la paroi de séparation (6) est encastrée dans l'étrier de commande (13).

7. Diffuseur d'air (1) selon l'une quelconque des revendications 1 à 6, **caractérisé en ce que** la paroi de séparation (6) est constituée d'un matériau à absorption acoustique.

8. Diffuseur d'air (1) selon l'une quelconque des revendications 1 à 7, **caractérisé en ce que** la paroi de séparation (6) est orientée verticalement.

9. Diffuseur d'air (1) selon l'une quelconque des revendications 1 à 8, **caractérisé en ce qu'**au moins une lamelle (7) orientée perpendiculairement à la paroi de séparation (6) est disposée en pouvant pivoter de façon perpendiculaire par rapport à sa direction de pivotement.

10. Procédé servant à influencer une caractéristique d'écoulement d'au moins deux flux d'air (L_{D}, L_{S}) ayant une caractéristique différente d'écoulement, lesquels flux d'air s'écoulent à chaque fois à partir d'un des conduits de guidage d'air (2.1 à 2.n) d'un diffuseur d'air (1), disposés parallèlement l'un à l'autre et au moins au nombre de deux, procédé dans lequel sont réglés, sortant de chaque conduit de guidage d'air (2.1 à 2.n), au moins un flux d'air (L_{D}) ayant une caractéristique d'écoulement diffus, un flux d'air (L_{S}) ayant une caractéristique d'écoulement dirigé et / ou, en combinant ces caractéristiques, une caractéristique globale d'écoulement est réglée dans une zone d'interaction (5) disposée dans la zone - côté sortie d'écoulement - des conduits de guidage d'air (2.1 à 2.n), où une interaction entre les flux d'air (L_{D}, L_{S}) est influencée au moyen d'une paroi de séparation (6) disposée dans la zone d'interaction (5), entre les flux d'air (L_{D}, L_{S}) de conduits de guidage d'air voisins (2.1 à 2.n),
**caractérisé en ce que** la paroi de séparation (6) servant à influencer une direction d'écoulement est actionnée de façon pivotante, dans le même sens que les conduits de guidage d'air (2.1 à 2.n) ou leurs conduits d'écoulement dirigé (3), ou bien dans le même sens que des parties des conduits de guidage d'air (2.1 à 2.n) ou des conduits d'écoulement dirigé (3).

11. Procédé selon la revendication 10, où la caractéristique d'écoulement dirigé, pour chacun des conduits de guidage d'air (2.1 à 2.n), est provoquée par la traversée, à chaque fois, d'un conduit d'écoulement dirigé (3) disposé dans un conduit d'écoulement tourbillonnaire (4), et en ce que la caractéristique d'écoulement diffus est provoquée par la traversée du conduit d'écoulement tourbillonnaire (4).
